# EUROPÄISCHE PATENTSCHRIFT

(11) **EP 1 568 149 B1**
(45) Veröffentlichungstag und Bekanntmachung des Hinweises auf die Patenterteilung: **12.07.2006**
(21) Anmeldenummer: 03769235.7
(22) Anmeldetag: 09.10.2003
(51) Int. Cl.: H04B 3/00, H02H 9/00

(54) **SCHUTZSCHALTUNG ZUM SCHUTZ GEGEN ÜBERSPANNUNG FÜR EINEN CAN-BUS-TRANSCEIVER**
PROTECTIVE CIRCUIT FOR PROTECTION AGAINST OVERVOLTAGE FOR A CAN-BUS TRANSCEIVER
CIRCUIT DE PROTECTION CONTRE LA SURTENSION POUR UN EMETTEUR-RECEPTEUR DE BUS CAN

(30) Priorität: 05.11.2002 DE 10251473
(43) Veröffentlichungstag der Anmeldung: 31.08.2005
(73) Patentinhaber: SIEMENS AKTIENGESELLSCHAFT, 80333 München (DE)
(72) Erfinder: BOLZ, Stephan, 93102 Pfatter (DE)
(86) Internationale Anmeldenummer: PCT/DE2003/003348
(87) Internationale Veröffentlichungsnummer: WO 2004/042950

(56) Entgegenhaltungen:
- EP-A- 0 895 438
- DE-A- 10 102 243
- DE-A- 19 944 833

## Beschreibung

Die Erfindung betrifft eine Schutzschaltung zum Schutz gegen Überspannung für einen spannungsmäßig für ein erstes Bordnetz ausgelegten CAN-Bus-Transceiver, welcher in einem zweiten Bordnetz, insbesondere einem Kraftfahrzeug-Bordnetz, mit einer gegenüber dem ersten Bordnetz mehrfach höheren Bordnetzspannung allein oder in einem Zweispannungsbordnetz mit dem ersten und dem zweiten Bordnetz betrieben wird, gemäß den Merkmalen von Anspruch 1.

Die Einführung von Kraftfahrzeug-Bordnetzen mit Spannungen von 14V + 42V bzw. nur 42V ist seit einiger Zeit im Gespräch und steht kurz bevor. Das größte Hindernis bei der Verwendung der im 14V-Bordnetz verwendeten Elektronik im 42V-Bordnetz ist die fehlende Kurzschlußfestigkeit dieser Elektronik nach 42V.

War bisher im 14V-Bordnetz (Vbat1 = 12V) eine Kurzschlussfestigkeit nach 14-18V (permanent) und nach 32-36V (transient) ausreichend, so sind im 42V-Bordnetz (Vbat2 = 36V) Kurzschlussfestigkeiten von 58V (permanent) und bis zu 70V (transient) gefordert.

Da existierende ASICs auch in ihrer Spannungsfestigkeit auf das 14V-Bordnetz optimiert sind, ist deren unmittelbare Verwendung im 42V-Bordnetz meist nicht möglich. Das kann in der Regel nur durch Einsatz einer anderen, spannungsfesteren Halbleitertechnologie erreicht werden.

Ein solcher Technologiewechsel entspricht in der Regel einem Neudesign des jeweiligen ASICs mit hohen Kosten in Millionenhöhe und einer Entwicklungsdauer von mehreren Jahren.

Um Pilotserienmodelle für das 42V-Bordnetz mit geeigneter Elektronik zu versehen, sind alternative Wege erforderlich. Es lassen sich, insbesondere für Ein- und Ausgangsfunktionen mit geringer Treiberleistung, Schutzschaltungen finden, die bei Kurzschluß nach 42V-Bordnetzspannungen eine Trennung vornehmen. Werden sie diskret aufgebaut, so ergeben sich, zusammen mit den ursprünglichen Funktionsmodulen, 42V-taugliche Baugruppen.

Umfangreiche Untersuchungen haben ergeben, daß ein dringender Bedarf an 42V-tauglichen Kommunikationsschnittstellen besteht. Dies trifft insbesondere auf den CAN-Bus-Transceiver zu, da CAN mittlerweile zum Standard im Automobil geworden ist und nahezu in jeder Motor- und Getriebesteuerung verwendet wird.

Ein erfolgreiches diskretes Schaltungskonzept kann auch Vorlage für eine spätere Integration sein.

Aus DE 197 33 250 A1 ist eine Schaltungsanordnung für eine Netzabschlusseinheit zum Ein- und Auskoppeln von Nutzsignalen und der Speisung von Endeinrichtungen an Vierdraht-Schnittstellen in digital gesteuerten Kommunikationsnetzen bekannt, wobei ein Schutz der Speiseschaltung gegen kurzzeitigen Überstrom durch eine Strombegrenzung bzw. gegen andauernden Überstrom durch einen Speiseabschalter mit zeitgesteuertem Speiseeinschalter erzielt ist und die einen aktiven Leitungstreiber zum Erreichen des erforderlichen Sendepegels auf den Leitungen aufweist.

In DE 43 27 035 A1 ist eine Anordnung zur bidirektionalen Datenübertragung auf einem Zweidraht-BUS-System offenbart, welche bei einer Vielzahl von Leitungsstörungen im Eindraht-Betriebsmodus funktioniert und dabei Verlustleistungen auch bei Kurzschluss gegen eine hohe Betriebsspannung verhindert.

Es ist Aufgabe der Erfindung, eine für den CAN-Bus-Transceiver geeignete, technisch einfach zu realisierende und integrierbare Schutzschaltung zu schaffen, die es ermöglicht, einen für das 14V-Bordnetz ausgelegten Transceiver auch im 42V-Bordnetz zu verwenden.

Diese Aufgabe wird erfindungsgemäß durch eine Schutzschaltung gemäß den Merkmalen des Anspruchs 1 gelöst.

Vorteilhafte Weiterbildungen der Erfindung sind den Unteransprüchen zu entnehmen.

Die Erfindung umfasst die technische Lehre, in jede der beiden Leitungen des CAN-Bus einen Strombegrenzungswiderstand zur Begrenzung der Kurzschlussströme zu legen und die dann verringerte Treiberleistung des Transmitters unter Berücksichtigung spezifischer EMV-Aspekte (Common-Mode-Signal) durch eine Zusatzschaltung wiederherzustellen, wobei diese Zusatzschaltung bei einem Kurzschluß nach 42V abgeschaltet wird (Eigenschutz).

Ein Ausführungsbeispiel nach der Erfindung wird nachstehend anhand einer schematischen Zeichnung näher erläutert. In der Zeichnung zeigen:
- Figur 1: ein Gesamtschaltbild eines bekannten CAN-Bus mit Transceiver,
- Figur 2: ein Prinzipschaltbild eines CAN-Bus-Transceivers,
- Figur 3a: die idealen Signale auf den Leitungen des CAN-Bus,
- Figur 3b: die realen Signale auf den Leitungen des CAN-Bus,
- Figur 4: ein Schaltbild der erfindungsgemäßen Schutzschaltung.

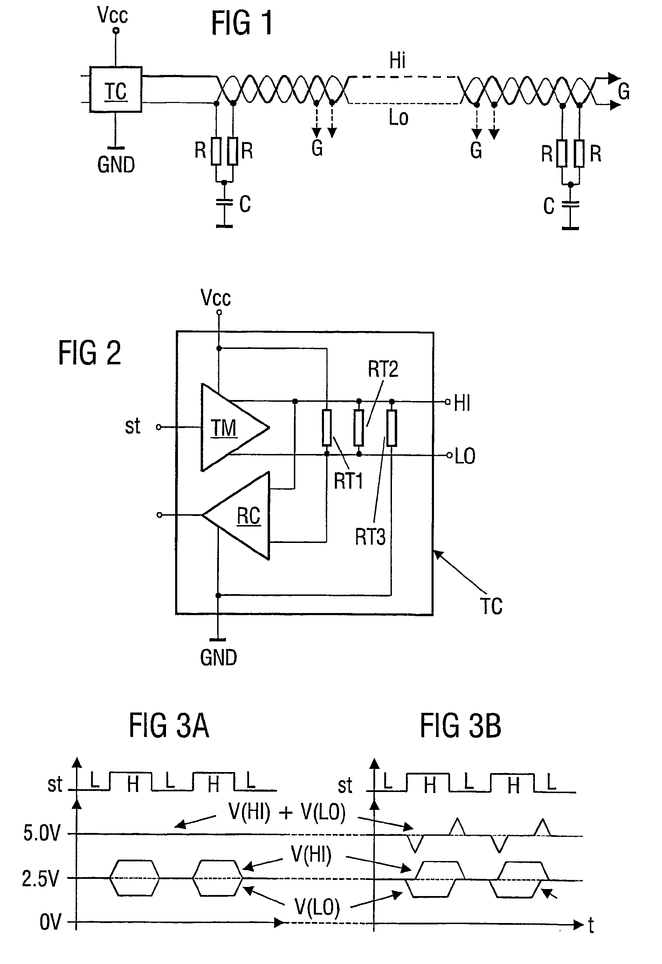

Figur 1 zeigt ein Gesamtschaltbild einer bekannten Version des CAN-Bus zur differentiellen Datenübertragung in einem 14V-Bordnetz, der eine erste (HI) und eine zweite Busleitung (LO) aufweist, die in der Regel als verdrilltes Leitungspaar ausgeführt sind. Die HI-Leitung ist in Figur 1 fett hervorgehoben. Am einen Ende der CAN-Busleitung befindet sich ein Transceiver TC, der mit einem Steuergerät (Microcomputer, Controller etc.) kommuniziert, am anderen Ende ist ein über den CAN-Bus anzusteuerndes Gerät G angeschlossen, welches selbst über einen nicht dargestellten Transceiver an den CAN-Bus angeschlossen ist. Weitere Geräte G (und Transceiver) können an jedem Punkt des CAN-Bus angeschlossen sein. Jeder Transceiver eines weiteren Geräts G benötigt eine erfindungsgemäße Schutzschaltung gegen Kurzschlüsse im 42V-Bordnetz.

Als Transceiver TC für eine Highspeed-Version wird beispielsweise ein Philips PCA82C250 verwendet, dessen Daten dem Datenblatt "Philips semiconductors PCA82C250 CAN controller interface, Product specification" vom 13. Januar 2000 zu entnehmen sind.

Die Leitungsimpedanz beträgt beispielsweise 120Ω, demnach ist der CAN-Bus auf beiden Seiten mit zwei zwischen den Leitungen HI und LO in Reihe geschalteten Widerständen R (zu je 60Ω) und einem geerdeten Kondensator C (mit 100nF) dazwischen abgeschlossen. Die so gewonnene niederohmige Impedanz nach Masse hilft bei der Unterdrückung von (EMV-) Gleichtaktsignalen.

Figur 2 zeigt ein Prinzipschaltbild eines CAN-Bus-Transceivers TC. Es besteht aus einem Transmitter TM (Sendermodul) und einem Receiver RC (Empfängermodul). Zusätzlich ist ein hochohmiges Widerstandsnetzwerk zum Einstellen des Gleichspannungs-Arbeitspunkts integriert.

Dieses Widerstandsnetzwerk besteht beispielsweise aus einem zwischen dem Pluspol Vcc der Versorgungsspannung des Transceivers TC und der LO-Leitung des CAN-Bus geschalteten Widerstand RT1, einem zwischen HI- und LO-Leitung geschalteten Widerstand RT2, und einem zwischen HI-Leitung und Bezugspotential GND geschalteten Widerstand RT3. Dies ist eine mögliche Schaltung zur Erzeugung eines Gleichspannungspegels von 2.5V. RT1 und RT3 haben dabei den gleichen, hochohmigen Wert (z.B. je 100kΩ), während RT2 niederohmiger ist (z.B. 5kΩ). Durch diese Anordnung ist die Spannung an der HI-Leitung geringfügig niedriger als an der LO-Leitung, was durchaus gewünscht ist. Die an den Transceiveranschlüssen TCHI und TCLO messbare differentielle Eingangsimpedanz liegt bei dieser Schaltungsbemessung bei ca. 5kΩ.

Ein etwas ausführlicheres Schaltbild des Transceivers TC ist dem Blockdiagramm in Figur 1 des bereits erwähnten Philips-Datenblattes des PCA82C250 CAN controller interface zu entnehmen.

Auf den Busleitungen HI und LO sind, wie Figur 3a zeigt, zwei Pegelzustände generierbar:
a) beide Leitungen liegen auf einem Gleichspannungspotential V(HI) = V(LO) = +2.5V. Dieser Zustand entspricht dem "rezessiven" L-Pegel des Steuersignals st,
b) auf der Leitung HI liegt ein Gleichspannungspotential V(HI) = 3.5V (2.5V + 1V) und auf der Leitung LO liegt ein Gleichspannungspotential V(LO) = 1.5V (2.5V - 1V). Dieser Zustand entspricht dem "dominanten" H-Pegel des Steuersignals st.

Dadurch soll gewährleistet werden, daß die Summenspannung V(HI) + V(LO) = 5V beider Leitungen zu jedem Zeitpunkt konstant ist, was die Entstehung hochfrequenter Störabstrahlung (EMV) minimiert.

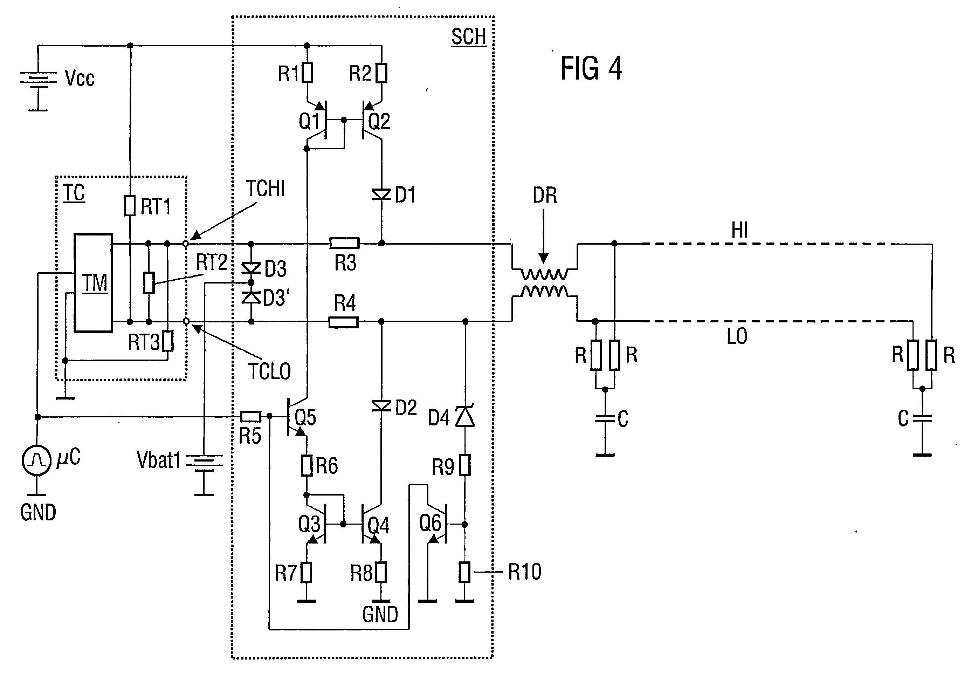

Da das Ein- und Ausschalten der zusätzlichen Potentiale (±1V) bei bekannten Transceiver-Ausführungen nicht vollkommen zeitgleich stattfindet, kommt es bei den Schaltvorgängen zu Spannungsspitzen, sog. "spikes", im Summensignal, die eine unerwünschte, hochfrequente Störsignalabstrahlung verursachen, siehe Figur 3b. Dem wird dadurch begegnet, dass eine CAN-Bus-Drossel DR zwischen Transceiver TC und den Leitungen HI und LO des CAN-Bus eingefügt wird, siehe Figur 4.

Diese Drossel DR hat die Wirkung eines Übertragers, welcher die Differenzen der Signalverläufe zwischen den Leitungen ausgleicht, so dass die Signalformen dem Ideal angenähert werden können. Dies minimiert die "spikes" und senkt die EMV-Störstrahlung.

Der Transmitter TM ist sowohl gegen einen Kurzschluß nach Bezugspotential (0V), nach negativen Spannungen (Massepotentialverschiebungen, negative transiente Spannungen) als auch nach Batteriespannung Vbat1 (nach 14-18V permanent und nach 32-36V transient) geschützt. Bei Kurzschluss nach 42V sind diese Maßnahmen jedoch wirkungslos, da die Durchbruchspannung der Transistoren und Schutzdioden weit überschritten wird. Es kommt in diesem Fall zu überhöhtem Stromfluß und zerstörerischer Überhitzung des ASICs.

Für den Receiver RC gelten dieselben Schutzmaßnahmen wie für den Transmitter.

Die fatale Wirkung bei einem Kurzschluß im 42V-Bordnetz (58V permanent und bis zu 70V transient) ergibt sich durch den hohen Wert der Spannung und die daraus resultierenden Ströme. Eine Schutzschaltung soll die volle Funktion des Transceivers nicht beeinträchtigen, sie soll aber andererseits schädliche Spannungspegel zuverlässig von den Transceiveranschlüssen fernhalten.

Figur 4 zeigt eine erfindungsgemäße Schaltung, mittels welcher ein für ein 14V-Bordnetz Vbat1 ausgelegter, in einem Zweispannungsbordnetz Vbat1 + Vbat2 betriebener Transceiver TC zuverlässig gegen Kurzschlüsse im 42V-Bordnetz (permanent ~60V und transient ~70V) geschützt wird. Dies wird erreicht, indem die Spannungen an den Transceiveranschlüssen TCHI, TCLO an die Batteriespannung Vbat1 (+14V) geklemmt werden, sowie durch eine Begrenzung des Fehlerstroms über in die Busleitungen eingefügte Begrenzungswiderstände, die so bemessen sein müssen (beispielsweise je 1kΩ/1W), dass die Receiverfunktion des Transceivers TC nicht beeinträchtigt wird.

Da nun aber der Transmitter durch diese Begrenzungswiderstände vom CAN-Bus entkoppelt ist, ist zum Betrieb eine Zusatzschaltung erforderlich, welche die Aufrechterhaltung des Gleichspannungspegels von 2.5V auf den Busleitungen gewährleistet, die aber selbst gegen Kurzschlüsse im 42V-Bordnetz (60/70V) geschützt sein muss.

In Figur 4 ist der CAN-Bus wie in Figur 1 dargestellt. Am einen Ende des CAN-Bus befindet sich der Transceiver TC (wobei hier nur dessen Transmitter TM dargestellt ist), die CAN-Bus-leitungen HI und LO, gestrichelt hervorgehoben, sind wieder auf beiden Seiten mit den beiden zwischen den Leitungen HI und LO in Reihe geschalteten Widerständen R und dem geerdeten Kondensator C dazwischen abgeschlossen. Die Leitungen sind der Übersichtlichkeit wegen nicht verdrillt dargestellt, auch die anzuschließenden Geräte und Transceiver sind nicht angedeutet, jedoch ist die bereits erwähnte Drossel DR zwischen Transceiver TC und CAN-Busleitungen gezeigt.

Eine Ansteuerquelle µC (Mikrocomputer, Controller etc.) liefert das Steuersignal st für den Sendebetrieb des Transceivers TC. Zwischen den Ausgängen des Transceivers TC und den Busleitungen HI und LO sind die Begrenzungswiderstände R3 und R4 als Reihenwiderstände eingefügt. Zwischen den beiden Busanschlüssen (HI und LO) des Transceivers TC sind zwei Dioden D3 und D3' angeordnet, deren Katoden miteinander und mit einem vorgegebenen Potential, beispielsweise dem der ersten Bordspannung Vbat1 (+12V), verbunden sind, deren Minuspol auf Bezugsspannungspotential GND liegt.

Wenn nur ein 42V-Bordnetz Vbat2 vorhanden ist, können die Katoden der zwei Dioden D3 und D3' an ein vorhandenes Potential oder eine entsprechend dimensionierte Zenerdiode gelegt werden. Der Wert des vorgegebenen Potentials P bzw. der Wert der Durchbruchspannung Vz der Zenerdiode kann in einem Bereich zwischen der Versorgungsspannung Vcc des Transceivers TC und der Bordnetzspannung, für die der Transceiver TC ausgelegt ist (hier Vbat1), liegen.

Da die Transceiveranschlüsse TCHI, TCLO über die Widerstände R3 und R4 vom CAN-Bus entkoppelt sind, kann der Transceiver die erforderlichen Spannungspegel V(HI) = 3.5V und V(LO) = 1.5V an den Busleitungen HI, LO nicht mehr erzeugen.

Aus diesem Grund sind zwei Stromspiegelschaltungen Q1-Q2 und Q3-Q4 vorgesehen, welche diese Aufgabe erledigen. Zur Erzeugung des Referenzstroms für die erste (Q1-Q2) und zweite Stromspiegelschaltung (Q3-Q4) ist zwischen den zwischen dem Pluspol (+Vcc) der Versorgungsspannung (Vcc) des Transceivers (TC) und Bezugspotential (GND) in Reihenschaltung angeordneten Transistoren (Q1 und Q3) der beiden Stromspiegelschaltungen (Q1-Q2, Q3-Q4) ein Widerstand (R6) und ein dritter Transistor (Q5) eingefügt.

Transistor Q2, welcher zusammen mit Transistor Q1 die erste Stromspiegelschaltung bildet, ist mit dem Pluspol +Vcc der Versorgungsspannung über einen Widerstand R2 und mit der Busleitung HI über eine Diode D1 (in Stromdurchlassrichtung zur Busleitung HI; als Verpolungsschutz) verbunden.

Transistor Q4, welcher zusammen mit Transistor Q3 die zweite Stromspiegelschaltung bildet, ist mit Bezugspotential GND über einen Widerstand R8 und mit der Busleitung LO über eine Diode D2 (in Stromdurchlassrichtung von der Busleitung LO weg; als Verpolungsschutz) verbunden.

Beide Stromspiegelschaltungen sind für einen solchen Ausgangsstrom auszulegen, dass sie, bei Ansteuerung durch den Transceiver TC, am CAN-Bus den erforderlichen Spannungshub von +1V auf der Leitung HI und -1V auf der Leitung LO (= 2V Spitze-Spitze) erzeugen können.

Beide Stromspiegelschaltungen Q1-Q2, Q3-Q4 werden synchron mit dem Steuersignal st des Transceivers TC über den dritten Transistor Q5 ein- und ausgeschaltet.

Zwischen der Busleitung LO und Bezugspotential GND ist eine Reihenschaltung einer Zenerdiode D4 und zweier Widerstände R9 und R10 angeordnet. Der Verbindungspunkt beider Widerstände ist mit der Basis eines Transistors Q6 verbunden, dessen Emitter auf Bezugspotential GND liegt und dessen Kollektor mit der Basis des dritten Transistors Q5 verbunden ist. Durch diese Schaltung werden die beiden Stromspiegelschaltungen Q1-Q2, Q3-Q4 abgeschaltet, sobald die Spannung an einer der CAN-Bus-leitungen einen Wert von beispielsweise der Spannung (+12V) des ersten Bordnetzes Vbat1 überschreitet.

Bei einem Kurzschluß auf einer der CAN-Busleitungen im 42V-Bordnetz (bis 60/70V auf der HI- oder LO-Leitung) wird die entsprechende Diode D3, D3' leitend. Der Strom wird durch die Begrenzungswiderstände R3, R4 auf beispielsweise 30mA begrenzt, weshalb diese für eine höhere Leistung ausgelegt sein müssen, beispielsweise 1kΩ/1W, wie bereits erwähnt. Durch diese Maßnahme werden die Transceiverausgänge auf eine um den Spannungsabfall an der Diode D3, D3' erhöhte Spannung Vbat1 + 0.7V begrenzt. Gegen eine solche Spannung ist der Transceiver intern geschützt.

Der Transceiver TC bleibt bei Datenempfang und in der rezessiven Phase stromlos, in der dominanten Phase wird der Strom auf ca. 40mA begrenzt.

Mittels der beiden Dioden D1, D2 sind die Stromspiegelschaltungen Q1-Q2 und Q3-Q4 sowohl gegen Verpolung als auch gegen einen Kurzschluß im 42V-Bordnetz auf einer der CAN-Busleitungen geschützt. Zusätzlich werden beide Stromspiegelschaltungen durch Transistor Q6 geschützt, welcher die beiden Stromspiegelschaltungen abschaltet, sobald die Spannung an einer der CAN-Busleitungen einen Wert von beispielsweise 12V überschreitet.

Die Receiverfunktion des Transceivers TC, wenn also der Transceiver eines Geräts G (Figur 1) zum Receiver des Transceivers TC sendet, wird durch die beschriebenen Maßnahmen nicht beeinträchtigt. Wird für den differentiellen Eingangswiderstand der ungünstigste Wert (5kΩ) angenommen, so ergibt sich zusammen mit den Begrenzungswiderständen R3, R4 ein Spannungsteiler, der das Bussignal zum Receiver hin zwar abschwächt (von ±1V auf ca. ±0.7V); dieser Wert entspricht jedoch noch der Spezifikation des beispielsweise verwendeten Transceivers PCA82C250.

Das Ergebnis des auf die beschriebene Weise geschützten Transceivers ist folgendes:
die Schutzschaltung schützt den Transceiver zuverlässig vor Kurzschlüssen (wenigstens bis 60V permanent und 70V transient) auf den Busleitungen,
die Schutzschaltung ist eigensicher und mit Standardbauelementen einfach zu implementieren;
das Schaltungskonzept der Schutzschaltung eignet sich zur Integration in ein ASIC;
die relevanten Spezifikationsparameter des Transceivers (beispielsweise des PCA82C250 und des CAN-Bus werden eingehalten.

Die Ausgangssignale des erfindungsgemäß modifizierten Transmitters TM sind sehr symmetrisch, so dass sich voraussichtlich die CAN-Bus-Drossel DR einsparen lässt, ohne die Störstrahlungsgrenzen zu überschreiten. Dies bedeutet eine weitere Kostensenkung.

Mit der erfindungsgemäßen Schutzschaltung ist eine Überbrückung der Zeit bis zur Verfügbarkeit einer vollintegrierten Lösung möglich.

## Patentansprüche

1. Schutzschaltung zum Schutz gegen Überspannung für einen spannungsmäßig für ein erstes Bordnetz (Vbat1) ausgelegten CAN-Bus-Transceiver (TC), welcher in einem zweiten Bordnetz (Vbat2) mit einer gegenüber dem ersten Bordnetz (Vbat1) mehrfach höheren Bordnetzspannung allein oder in einem Zweispannungsbordnetz mit dem ersten (Vbat1) und dem zweiten Bordnetz (Vbat2) betrieben wird,
**dadurch gekennzeichnet,**
**dass** zwischen den beiden Busanschlüssen (TCHI, TCLO) des Transceivers (TC) zwei Dioden (D3, D3') angeordnet sind, deren Katoden miteinander verbunden und auf ein vorgegebenes Potential (P) gelegt sind,
**dass** zwischen jedem Busanschluß (TCHI, TCLO) des Transceivers (TC) und der ihm zugeordneten Busleitung (HI, LO) ein Begrenzungswiderstand (R3, R4) angeordnet ist, und
**dass** zur Wiederherstellung der durch die Begrenzungswiderstände (R3, R4) verringerten Spannungspegel an den Busleitungen (HI, LO) zwischen dem Pluspol (+Vcc) der Versorgungsspannungsquelle (Vcc) des Transceivers (TC) und der ersten Busleitung (HI) eine erste Stromspiegelschaltung (Q1-Q2) angeordnet ist, und zwischen der zweiten Busleitung (LO) und Bezugspotential (GND) eine zweite Stromspiegelschaltung (Q3-Q4) angeordnet ist.

2. Schutzschaltung nach Anspruch 1, **dadurch gekennzeichnet, dass** der Wert des vorgegebenen Potentials (P) in einem Bereich zwischen der Versorgungsspannung (+Vcc) des Transceivers (TC) und der Bordnetzspannung (Vbat1), für die der Transceiver TC ausgelegt ist, liegt.

3. Schutzschaltung nach Anspruch 1 oder 2, **dadurch gekennzeichnet, dass** das vorgegebene Potential (P) die Durchbruchspannung einer Zenerdiode ist, deren Wert in einem Bereich zwischen der Versorgungsspannung (+Vcc) des Transceivers (TC) und der Bordnetzspannung (Vbat1), für die der Transceiver TC ausgelegt ist, liegt.

4. Schutzschaltung nach Anspruch 1, **dadurch gekennzeichnet, dass** zur Erzeugung des Referenzstroms für die erste (Q1-Q2) und zweite Stromspiegelschaltung (Q3-Q4) zwischen den zwischen dem Pluspol (+Vcc) der Versorgungsspannung (Vcc) des Transceivers (TC) und Bezugspotential (GND) in Reihenschaltung angeordneten Transistoren (Q1 und Q3) der beiden Stromspiegelschaltungen (Q1-Q2, Q3-Q4) ein Widerstand (R6) und ein dritter Transistor (Q5) eingefügt ist.

5. Schutzschaltung nach Anspruch 4, **dadurch gekennzeichnet, dass** die Stromspiegelschaltungen (Q1-Q2, Q3-Q4) mittels eines den Sendebetrieb des Transceivers (TC) steuernden Steuersignals (st) über den dritten Transistor (Q5) ein- und ausgeschaltet werden.

6. Schutzschaltung nach einem der Ansprüche 1 bis 5, **dadurch gekennzeichnet, dass** zwischen der Busleitung (LO) und Bezugspotential (GND) eine Reihenschaltung einer Zenerdiode (D4) und zweier Widerstände (R9, R10) angeordnet ist, wobei der Verbindungspunkt beider Widerstände mit der Basis eines weiteren Transistors (Q6) verbunden ist, dessen Emitter auf Bezugspotential (GND) liegt und dessen Kollektor mit der Basis des dritten Transistors (Q5) verbunden ist, wodurch die beiden Stromspiegelschaltungen (Q1-Q2, Q3-Q4) abgeschaltet werden, sobald die Spannung an einer der CAN-Bus-leitungen (HI, LO) einen mittels der Reihenschaltung der Zenerdiode (D4) und der beiden Widerstände (R9, R10) bestimmten Spannungswert überschreitet.

7. Schutzschaltung nach einem der Ansprüche 1 bis 6, **dadurch gekennzeichnet, dass** jedem Transceiver eines an den CAN-Bus (HI, LO) angeschlossenen Geräts (G) eine Schutzschaltung zugeordnet ist.

## Claims

1. A protective circuit for protection against overvoltage for a CAN bus transceiver (TC) designed in voltage terms for a first vehicle electrical system (Vbat1), said transceiver being operated in a second vehicle electrical system (Vbat2) having a voltage several times that of the first vehicle electrical system (Vbat1) either alone or in a two-voltage vehicle electrical system with the first vehicle electrical system (Vbat1) and the second vehicle electrical system (Vbat2),
**characterised in that**
located between the two bus terminals (TCHI, TCLO) of the transceiver (TC) are two diodes (D3, D3') whose cathodes are connected to each other and to a predefined potential (P),
**in that** a limiting resistor (R3, R4) is located between each bus terminal (TCHI, TCLO) of the transceiver (TC) and the bus line (HI, LO) assigned thereto, and
**in that**, in order to restore the voltage levels reduced by the limiting resistors (R3, R4) on the bus lines (HI, LO) a first current-mirror circuit (Q1-Q2) is located between the positive terminal (+Vcc) of the supply voltage source (Vcc) of the transceiver (TC) and the first bus line (HI) and a second current-mirror circuit (Q3-Q4) is located between the second bus line (LO) and ground (GND).

2. The protective circuit according to claim 1, **characterised in that** the value of the predefined potential (P) is within a range between the supply voltage (+Vcc) of the transceiver (TC) and the vehicle electrical system voltage (Vbat1) for which the transceiver TC is designed.

3. The protective circuit according to claim 1 or 2, **characterised in that** the predefined potential (P) is the breakdown voltage of a Zener diode whose value is within a range between the supply voltage (+Vcc) of the transceiver (TC) and the vehicle electrical system voltage (Vbat1) for which the transceiver TC is designed.

4. The protective circuit according to claim 1, **characterised in that** in order to generate the reference current for the first current-mirror circuit (Q1-Q2) and second current-mirror circuit (Q3-Q4), a resistor (R6) and a third transistor (Q5) are inserted between the transistors (Q1 and Q3) of the two current-mirror circuits (Q1-Q2, Q3-Q4), which transistors are arranged in series between the positive terminal (+Vcc) of the supply voltage (Vcc) of the transceiver (TC) and ground (GND).

5. The protective circuit according to claim 4, **characterised in that** the current-mirror circuits (Q1-Q2, Q3-Q4) are activated and deactivated via the third transistor (Q5) by means of a control signal (st) controlling the transmitting operation of the transceiver (TC) .

6. The protective circuit according to one of the claims 1 to 5, **characterised in that** a series arrangement comprising a Zener diode (D4) and two resistors (R9) and (R10) is located between the bus line (LO) and ground (GND), with the connection point of the two resistors being connected to the base of a further transistor (Q6) whose emitter is applied to ground (GND) and whose collector is connected to the base of the third transistor (Q5), with the two current-mirror circuits (Q1-Q2, Q3-Q4) being deactivated as soon as the voltage on one of the CAN bus lines (HI, LO) exceeds a specific voltage value determined by means of the series-circuit arrangement of the Zener diode (D4) and the two resistors (R9, R10).

7. The protective circuit according to one of the claims 1 to 6, **characterised in that** each transceiver of a device (G) connected to the CAN bus (HI, LO) is assigned a protective circuit.

## Revendications

1. Circuit de protection pour la protection contre la surtension pour un émetteur-récepteur à bus CAN (TC) calculé en tension pour un premier réseau de bord (Vbat1) et qu'on fait fonctionner dans un deuxième réseau de bord (Vbat2) présentant seulement une tension de réseau de bord plusieurs fois supérieure à celle du premier réseau de bord (Vbat1) ou dans un réseau de bord bi-tension qui possède le premier réseau de bord (Vbat1) et le deuxième réseau de bord (Vbat2),
**caractérisé**
**en ce que**, entre les deux connexions de bus (TCHI, TCLO) de l'émetteur-récepteur (TC) sont disposées deux diodes (D3, D3') dont les cathodes sont reliées l'une à l'autre et sont mises à un potentiel prédéterminé (P),
**en ce que**, entre chaque connexion de bus (TCHI, TCLO) de l'émetteur-récepteur (TC) et la ligne de bus (HI, LO) qui lui correspond, est disposée une résistance de limitation (R3, R4), et
**en ce que**, pour rétablir les niveaux de tension abaissés par les résistances de limitation (R3, R4) sur les lignes de bus (HI, LO), un premier circuit à miroir de courant (Q1-Q2) est disposé entre le pôle PLUS (+Vcc) de la source de tension d'alimentation (Vcc) de l'émetteur-récepteur (TC) et la première ligne de bus (HI), et un deuxième circuit à miroir de courant (Q3-Q4) est disposé entre la deuxième ligne de bus (LO) et le potentiel de référence (GND).

2. Circuit de protection selon la revendication 1, **caractérisé en ce que** la valeur du potentiel prédéterminé (P) se trouve dans un intervalle entre la tension d'alimentation (+Vcc) de l'émetteur-récepteur (TC) et la tension du réseau de bord (Vbat1) pour laquelle l'émetteur-récepteur TC est conçu.

3. Circuit de protection selon la revendication 1 ou 2, **caractérisé en ce que** le potentiel prédéterminé (P) est la tension de claquage d'une diode de Zener dont la valeur se trouve dans un intervalle entre la tension d'alimentation (+Vcc) de l'émetteur-récepteur (TC) et la tension de réseau de bord (Vbat1) pour laquelle l'émetteur-récepteur TC est conçu.

4. Circuit de protection selon la revendication 1, **caractérisé en ce que**, pour produire le courant de référence pour le premier circuit à miroir de courant (Q1-Q2) et le deuxième circuit à miroir de courant (Q3-Q4), une résistance (R6) et un troisième transistor (Q5) sont intercalés entre les transistors (Q1 et Q3) des deux circuits à miroir de courant (Q1-Q2, Q3-Q4) qui sont disposés en série entre le pôle PLUS (+Vcc) de la tension d'alimentation (Vcc) de l'émetteur-récepteur (TC) et le potentiel de référence (GND).

5. Circuit de protection selon la revendication 4, **caractérisé en ce que** les circuits à miroir de courant (Q1-Q2, Q3-Q4) sont connectés et déconnectés par l'intermédiaire du troisième transistor (Q5) au moyen d'un signal de commande (st) qui commande le fonctionnement en émission de l'émetteur-récepteur (TC).

6. Circuit de protection selon une des revendications 1 à 5, **caractérisé en ce qu'**entre le conducteur de bus (LO) et le potentiel de référence (GND) est disposé un circuit série composé d'une diode de Zener (D4) et de deux résistances (R9, R10), le point de jonction des deux résistances étant relié à la base d'un transistor additionnel (Q6) dont l'émetteur est au potentiel de référence (GND) et dont le collecteur est relié à la base du troisième transistor (Q5), de sorte que les deux circuits à miroir de courant (Q1-Q2, Q3-Q4) sont déconnectés dès que la tension sur une des lignes de bus CAN (HI, LO) devient supérieure à une valeur de tension déterminée au moyen du circuit série composé de la diode de Zener (D4) et des deux résistances (R9, R10).

7. Circuit de protection selon une des revendication 1 à 6, **caractérisé en ce qu'**à chaque émetteur-récepteur d'un appareil (G) connecté au bus CAN (HI, LO), est associé un circuit de protection.
